# EUROPEAN PATENT SPECIFICATION

(11) **EP 1 669 627 B1**
(45) Date of publication and mention of the grant of the patent: **27.07.2011**
(21) Application number: 05027028.9
(22) Date of filing: 09.12.2005
(51) Int. Cl.: F16D 48/06, F16D 48/00

(54) **Clutch connection control device, clutch connection control method, and saddle-ride type vehicle**
Vorrichtung und Verfahren zur Steuerung des Einrückens einer Kupplung, und Spreitzsitz-Fahrzeug
Dispositif et procédé pour la contrôle d'embrayage, et véhicule à position à califourchon

(30) Priority: 10.12.2004 JP 2004359224
(43) Date of publication of application: 14.06.2006
(73) Proprietor: Yamaha Hatsudoki Kabushiki Kaisha, Iwata-shi, Shizuoka-ken (JP)
(72) Inventor: Zenno, Toru, Iwata-shi Shizuoka-ken (JP)
(74) Representative: Grünecker, Kinkeldey, Stockmair & Schwanhäusser Anwaltssozietät

(56) References cited:
- EP-A- 0 638 454
- DE-A1- 3 731 259
- US-A- 4 620 624
- US-A- 4 766 544

## Description

The present invention relates to a clutch connection control device according to the preamble of claim 1, a clutch connection control method according to the preamble of claim 6, and a saddle-ride type vehicle according to claim 5.

Some automatic vehicles and some semi-automatic vehicles, in which clutch manipulation by a rider is not needed, comprise a clutch connection device that makes connection or disconnection of a clutch through actuation of a clutch actuator. Some of such clutch connection devices set a clutch connecting speed to two or three speeds in order to improve a riding comfort in the course of a clutch connecting motion while shortening time for connection of a clutch. That is, in case of transition from a clutch disconnected state to a semi-clutching state, time for connection of a clutch is shortened by causing an engine side and a main-shaft side of the clutch to approach each other at high speed. Thereafter, such approach from the semi-clutching state until a clutch rotating speed difference becomes equal to or less than a predetermined value is made at low speed whereby an impact in the course of a clutch connecting motion is eliminated and a riding comfort is improved. Time for connection is in some cases shortened by causing the engine side and the main-shaft side of the clutch to approach each other again at high speed after a clutch rotating speed difference becomes equal to or less than the predetermined value.

With conventional clutch connection devices (known from JP-A-2001-146930 and JP-A-2001-173685), however, the engine side and the main-shaft side of the clutch are caused only to approach each other at two or three preset speeds in the course of a clutch connecting motion but a clutch connecting speed is not varied according to variation in clutch rotating speed difference. That is, notwithstanding a clutch rotating speed difference is gradually varied in the course of a clutch connecting motion with the lapse of time, two or three preset clutch connecting speeds are maintained until a clutch rotating speed difference becomes equal to or less than a predetermined value, without varying a clutch connecting speed according to such variation. Therefore, conventional clutch connection devices involve a problem that a clutch connecting motion is not made to flexibly answer to manipulation, for example, quick braking, quick throttle operation, of a vehicle by a rider in the course of a clutch connecting motion.

Although there are technologies (DE 37 31 259) which control a clutch based on a difference in rotating speed between drive side and driven side a flexible reaction in a clutch connecting motion is not feasible.

It is an object of the invention to provide a clutch connection control device capable of flexibly answering to manipulation of a vehicle by a rider in the course of a clutch connecting motion.

For the apparatus aspect, this objective is solved in an inventive manner by a device according to the features of independent claim 1.

Accordingly, the means for detecting a difference in rotating speed between a drive side and a driven side of the clutch is configured to repeat detection of the difference in rotating speed every predetermined period of time.

Further, preferably the means for varying a connecting speed of the clutch comprises means for storage of a clutch connecting speed, being configured to store a map indicative of a relationship between the rotating speed difference and the connecting speed of the clutch, and wherein the means for varying a connecting speed of the clutch is configured to vary the connecting speed of the clutch corresponding to the rotating speed difference of the clutch, according to the stored relationship.

Therein, the maps indicative of a relationship between the rotating speed difference and the connecting speed of the clutch may be provided every number of speeds.

The present device may further comprise a means for varying a starting clutch position at which the connecting speed of the clutch is varied, wherein the starting clutch position is varied according to a detected variation in the difference in rotating speed.

The above objective is further solved by a saddle-ride type vehicle comprising the device for controlling connection and disconnection of a clutch according to one the above embodiments.

For the method aspect, the present objective is solved in an inventive manner by a method according to the features of independent claim 6.

In the following, the present invention is explained in greater detail with respect to several embodiments thereof in conjunction with the accompanying drawings, wherein:
- Fig. 1: is a side view showing an outward appearance of a motorcycle (a saddle-ride type vehicle) according to an embodiment,
- Fig. 2: is a view showing a whole construction of a control system including a control device according to the embodiment,
- Fig. 3: is a view showing a sensor/switch connected to the control device,
- Fig. 4: is a block diagram illustrating the function of a main microcomputer,
- Fig. 5: is a view showing a second connecting motion starting clutch position map,
- Fig. 6: is a view showing a second connecting speed map,
- Fig. 7: is a view showing a second connecting speed map,
- Fig. 8: is a view showing time-variation of a clutch position, a turning angle of a shift actuator, and a gear position at the time of shift-up,
- Fig. 9: is a view showing time-variation of a clutch position, a turning angle of a shift actuator, and a gear position at the time of shift-down,
- Fig. 10: is a control flowchart illustrating a clutch connection control device, and
- Fig. 11: is a control flowchart illustrating the clutch connection control device.

A preferred embodiment will be described below in detail with reference to the drawings.

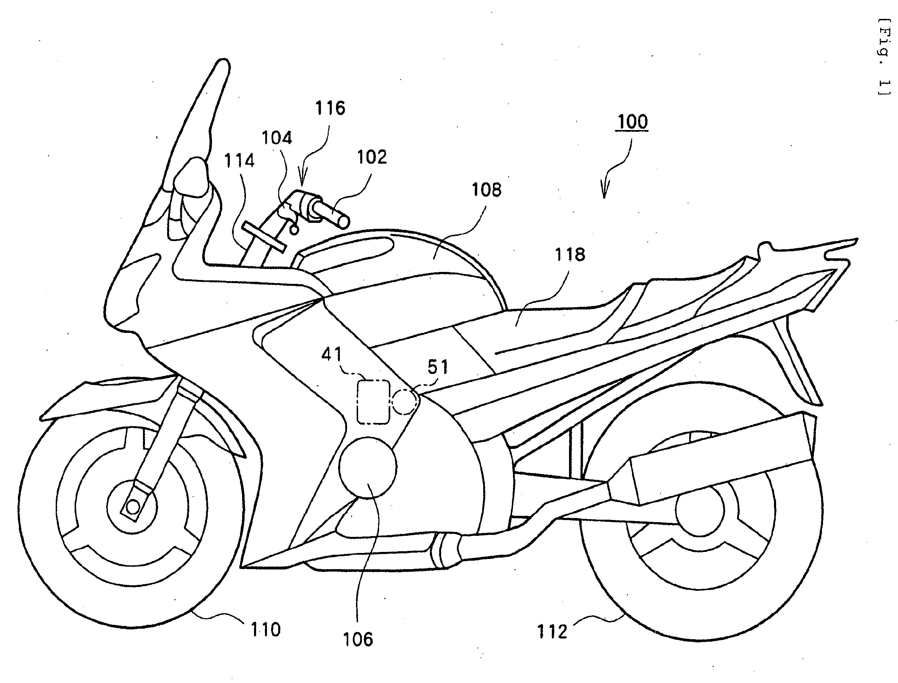

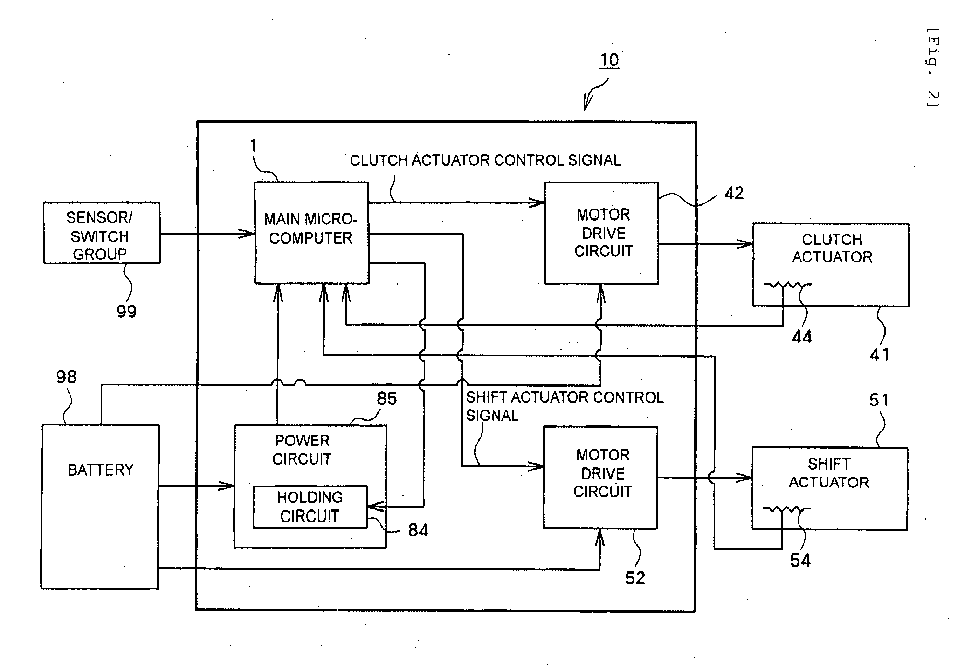

Fig. 1 is a side view showing an outward appearance of a motorcycle according to an embodiment. The motorcycle 100 shown in the figure is an embodiment of a saddle-ride type vehicle and comprises a front wheel 110 and a rear wheel 112. A handle 116 extending transversely to a vehicle traveling direction is mounted to a top of a front fork 114 mounted to the front wheel 110. The handle 116 mounts at one end thereof a grip 102 and a clutch lever 104 and at the other end thereof an accelerator grip and a brake lever (not shown). Also, a seat 118 is provided on an upper portion of the motorcycle 100 and a rider can get on the motorcycle 100 while straddling the seat 118. The motorcycle 100 is substantially the same in construction as known motorcycles, and has a feature in that a clutch actuator 41, which uses a motor to operate a clutch provided in a crankcase of an engine 106, is mounted above the engine 106, that is, below a fuel tank 108. Further, another feature resides in that a shift actuator 51 is also provided to use a motor to operate a transmission provided in a transmission casing of the engine 106. The clutch actuator 41 is controlled in operation by a control device 10 (see Fig. 2), and connecting and disconnecting motions of the clutch are performed by the clutch actuator 41. Also, the shift actuator 51 is controlled in operation by the control device 10 and the shift operation of the transmission is performed by the shift actuator 51. In addition, the clutch lever 104 is connected to the clutch actuator 41 by means of a length of wire, so that connection and disconnection of the clutch can be also performed by the clutch lever 104.

Fig. 2 is a view showing a whole construction of a control system mounted on the motorcycle 100.

Connected to the control device 10 are sensor/switch groups 99, the clutch actuator 41, and the shift actuator 51. A battery 98 is also connected to the control device 10 and electric power of the battery 98 is supplied to the control device 10. The electric power is also supplied to the clutch actuator 41 and the shift actuator 51 via the control device 10. Thus the electric power is used to operate the control device 10 and to operate the clutch actuator 41 and the shift actuator 51.

The clutch actuator 41 includes a dc motor, normal rotation of the dc motor can put the clutch in a disconnected state, and reverse rotation of the dc motor can put the clutch again in a connected state, or set a position of the clutch in an optional state between the disconnected state and the connected state. Also, mounted to the clutch actuator 41 is a clutch potentiometer 44 composed of a resistor, etc., so that voltage indicative of a state of the clutch actuator 41, that is, voltage indicative of a clutch position is applied to the control device 10 and the voltage value is used as information of clutch position by the control device 10.

Likewise, the shift actuator 51 also includes a dc motor, normal rotation of which can cause shift-up and reverse rotation of which can cause shift-down. The shift actuator 51 is mounted to a shift arm of the transmission. The dc motor is normally rotated to turn the shift arm in one direction and reversely rotated to turn the shift arm in a reverse direction. The shift actuator 51 mounts thereto a shift potentiometer 54 composed of a resistor, etc., so that voltage indicative of a state of the shift actuator 51, that is, voltage indicative of a turning angle of the shift arm is applied to the control device 10 and the voltage value is used as information of a turning angle of the shift actuator by the control device 10.

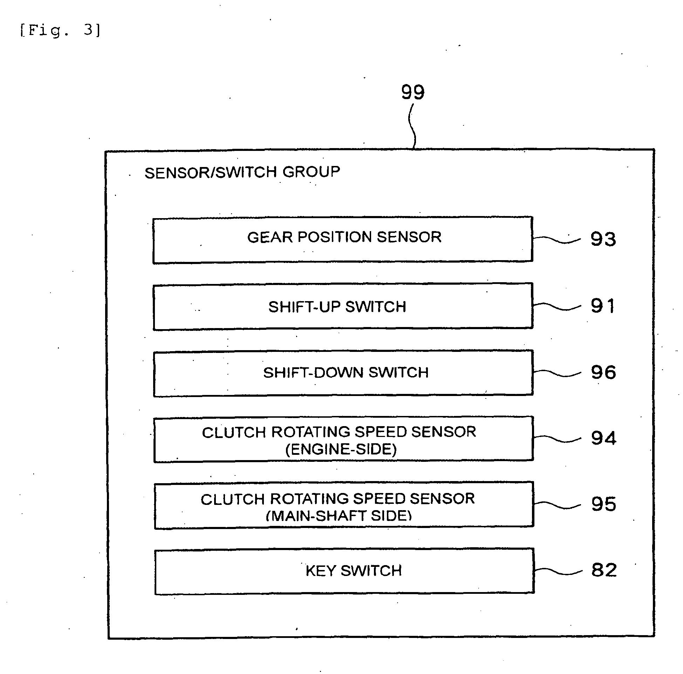

The respective sensor/switch groups 99 comprises, as shown in Fig. 3, a shift-up switch 91, a shift-down switch 96, a gear position sensor 93, a clutch rotating speed sensor (an engine-side clutch rotating speed sensor) 94 mounted to a member on an engine-side of the clutch, a clutch rotating speed sensor (a main-shaft side clutch rotating speed sensor) 95 mounted to a member on a main-shaft side of the clutch, and a key switch 82.

The shift-up switch 91 inputs speed change instructing information indicative of shift-up instructions of a rider into a main microcomputer 1, which forms the control device 10. Likewise, the shift-down switch 96 inputs speed change instructing information indicative of shift-down instructions of the rider into the main microcomputer 1. The gear position sensor 93 is mounted to the transmission and inputs a voltage value corresponding to a turning angle of a shift cam shaft, as gear position information, into the main microcomputer 1. The engine-side clutch rotating speed sensor 94 detects the rotating speed of a member on an engine-side of the clutch to input the same as engine-side clutch rotating speed information into the main microcomputer 1. Also, the main-shaft side clutch rotating speed sensor 95 detects a rotating speed of a member on a main-shaft side of the clutch to input the same as main-shaft side clutch rotating speed information into the main microcomputer 1. When a key of the motorcycle 100 is inserted into the key switch 82 and the key is turned toward an ON side, the key switch 82 outputs a signal (a switch-on signal) to the effect to the main microcomputer 1. When the switch-on signal is input, the main microcomputer 1 is started.

Referring again to Fig. 2, the control device 10 is constructed to center on the main microcomputer 1 to control an operation of the clutch actuator 41 and an operation of the shift actuator 51 on the basis of various information, which is indicative of a state of the vehicle and input from the sensor/switch groups 99, the clutch potentiometer 44, and the shift potentiometer 54. Specifically, after a rider manipulates the vehicle to instruct change of speed, the control device 10 operates the clutch actuator 41 to cause transition of the clutch from a connected state to a disconnected state. After switchover of the gear is completed, the control device 10 again operates the clutch actuator 41 to cause transition of the clutch to a connected state. Also, after a rider manipulates the vehicle to instruct change of speed, the control device 10 operates the shift actuator 51 to rotate the shift cam shaft to effect switchover of the gear. In this manner, the control device 10 realizes change of speed, which a rider desires.

Here, respective elements of the control device 10 is described.

The control device 10 comprises the main microcomputer 1, a power circuit 85, a motor drive circuit 42 for supply of electric power that drives the clutch actuator 41, and a motor drive circuit 52 for supply of electric power that drives the shift actuator 51.

The power circuit 85 comprises a switch (not shown) that interlocks with the key switch 82 to be made ON, and a holding circuit 84. When the switch is made ON, the power circuit 85 converts voltage of the battery 98 into a drive voltage for the main microcomputer 1 to begin applying the voltage on the main microcomputer 1. After the key switch 82 is made OFF, the switch is held in an ON state by the holding circuit 84. The power circuit 85 continues application of the drive voltage until the shutdown processing of the main microcomputer 1 is completed. When the shutdown processing is completed, the main microcomputer 1 instructs the holding circuit 84 to stop supply of electric power, so that supply of electric power to the main microcomputer 1 from the power circuit 85 is stopped.

The motor drive circuit 42 comprises a known H bridge circuit and is supplied with electric current from the battery 98. The motor drive circuit 42 feeds electric current, which rotates a dc motor of the clutch actuator 41 in a direction and at a speed conformed to a clutch actuator control signal supplied from the main microcomputer 1, to the dc motor. Likewise, the motor drive circuit 52 also comprises a known H bridge circuit and is supplied with electric current from the battery 98. The motor drive circuit 52 feeds electric current, which rotates a dc motor of the shift actuator 51 in a direction and at a speed conformed to a shift actuator control signal supplied from the main microcomputer 1, to the dc motor.

The main microcomputer 1 comprises a known computer to control operations of the clutch actuator 41 and the shift actuator 51 on the basis of various information, which is indicative of a state of the vehicle and input from the sensor/switch group 99, the clutch potentiometer 44, and the shift potentiometer 54. Also, after the key switch 82 is made OFF, the main microcomputer executes the shutdown processing and when the shutdown processing is terminated, the main microcomputer instructs the holding circuit 84 to stop supply of electric power.

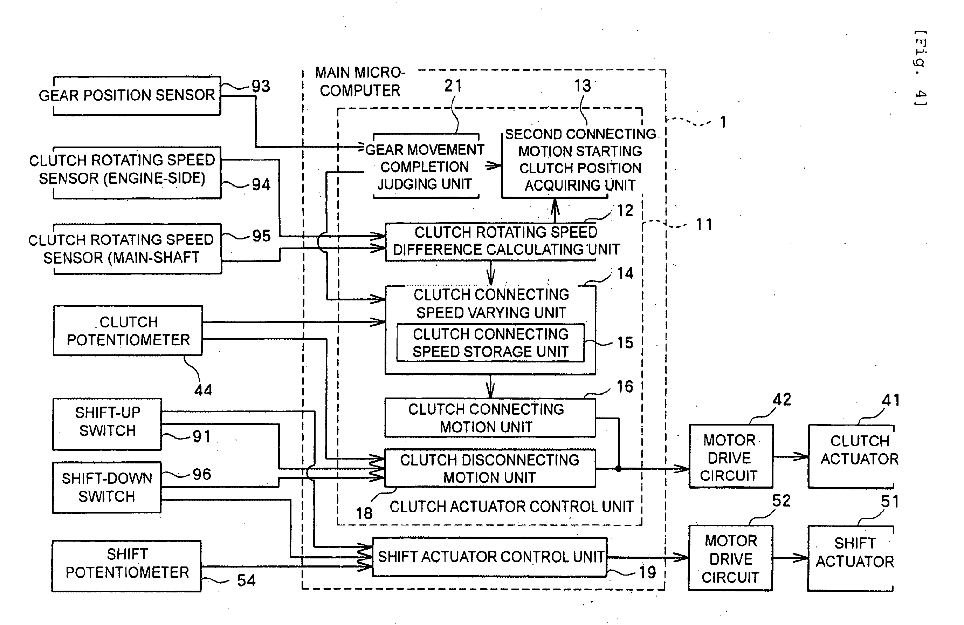

Subsequently, the function of the main microcomputer 1 is described in detail. Fig. 4 is a block diagram functionally and concentratedly illustrating that portion out of the function of the main microcomputer 1, which is related to the invention. As shown in Fig. 4, the main microcomputer 1 comprises a clutch actuator control unit 11 and a shift actuator control unit 19.

After the shift-up switch 91 or the shift-down switch 96 is made ON by a rider and speed change instructing information indicative of shift-up or shift-down is communicated, the clutch actuator control unit 11 operates the clutch actuator 41 to effect connection or disconnection of the clutch. The clutch actuator control unit 11 outputs a clutch actuator control signal to the motor drive circuit 42 to thereby execute operation of the clutch actuator 41. After speed change instructing information indicative of shift-up or shift-down is communicated, the shift actuator control unit 19 operates the shift actuator 51 to turn the shift arm in one direction or in a reverse direction. The shift arm turns whereby the shift cam shaft engaged by the shift arm is rotated to realize gear switchover. The shift actuator control unit 19 outputs a shift actuator control signal to the motor drive circuit 52 to thereby execute operation of the shift actuator 51.

A specific explanation is given to control of the clutch actuator 41, which the clutch actuator control unit 11 exercises.

When speed change instructing information is input from the shift-up switch 91 or the shift-down switch 96, the clutch actuator control unit 11 operates the clutch actuator 41 to cause transition of the clutch to a completely disconnected state from a connected state. Here, the completely disconnected state corresponds to a clutch position, in which a drive force of an engine is not entirely transmitted to the vehicle. Thereafter, the clutch actuator control unit 11 acquires gear position information from the gear position sensor 93 and starts transition from the completely disconnected state to the connected state at a point of time when it is determined that movements of gears are completed (clutch connecting motion).

In the course of a clutch connecting motion, the clutch actuator control unit 11 first performs a connecting motion of the clutch at a first connecting speed (a first connecting motion). Here, the first connecting speed is a connecting speed of the clutch, which is beforehand stored in the clutch actuator control unit 11 and constant with time. Thereafter, a connecting motion of the clutch at a second connecting speed is started from a point of time when a position of the clutch reaches a predetermined clutch position (a clutch position, in which a second connecting motion is started), which is determined according to a difference in clutch rotating speed (a second connecting motion). Here, the second connecting speed is one, which is set to be slower than the first connecting speed and the clutch actuator control unit 11 changes every a predetermined period of time on the basis of clutch rotating speed difference information.

Here, a specific explanation is given to a second connecting motion made by the clutch actuator control unit 11. In the course of a second connecting motion, the clutch actuator control unit 11 acquires a clutch rotating speed difference every a predetermined period of time (for example, every 1 msec). The clutch actuator control unit 11 beforehand stores a second connecting speed map, in which a clutch rotating speed difference and a second connecting speed correspond to each other. Whenever acquiring a clutch rotating speed difference, the clutch actuator control unit 11 sequentially acquires that second connecting speed, which corresponds to the clutch rotating speed difference, from the second connecting speed map. The clutch actuator control unit 11 makes connection of the clutch at the second connecting speed thus acquired. As a result, when a clutch rotating speed difference varies in the course of the second connecting motion, the second connecting speed also varies according to the variation. Thereafter, at a point of time when a clutch position and a clutch rotating speed difference meet predetermined conditions for the both (a second connecting motion terminating condition) in the course of the second connecting motion, the clutch actuator control unit 11 terminates the second connecting motion (when the second connecting motion is terminated). At the time of and after the second connecting motion is terminated, connection of the clutch is made at a third connecting speed (a third connecting motion). Here, a third connecting speed is one, at which the clutch is connected, and which is set to be slower than the second connecting speed and constant with time. In addition, the second connecting motion terminating condition defines that a clutch rotating speed difference is equal to or less than a second motion termination enabling rotating speed difference and a clutch position is equal to or less than a second motion termination enabling position.

A further detailed explanation is given to the function of the clutch actuator control unit 11. The clutch actuator control unit 11 comprises a clutch disconnecting motion unit 18, a clutch connecting motion unit 16, a clutch connecting speed varying unit 14, a clutch rotating speed difference calculating unit 12, a gear movement completion judging unit 21, and a second connecting motion starting clutch position acquiring unit 13.

The clutch rotating speed difference calculating unit 12 acquires a clutch rotating speed difference, which is a difference in rotating speed between a drive side and a driven side of the clutch. Specifically, the clutch rotating speed difference calculating unit 12 acquires clutch rotating speed information from the clutch rotating speed sensor 94 mounted to the member on the engine-side of the clutch and the clutch rotating speed sensor 95 mounted to the member on the main-shaft side, and acquires a difference between the rotating speeds as clutch rotating speed difference information. The clutch rotating speed difference calculating unit 12 communicates clutch rotating speed difference information thus calculated to the second connecting motion starting clutch position acquiring unit 13 and the clutch connecting speed varying unit 14.

The clutch disconnecting motion unit 18 operates the clutch actuator 41 to cause transition of the clutch from the connected state to the completely disconnected state in the case where speed change instructing information is input from the shift-up switch 91 or the shift-down switch 96 (a clutch disconnecting motion). In the course of a clutch disconnecting motion, the clutch disconnecting motion unit 18 acquires clutch position information from the clutch potentiometer 44 to judge whether the clutch reaches the completely disconnected state. At a point of time when the clutch reaches the completely disconnected state, the clutch disconnecting motion unit 18 stops motions of the clutch actuator 41.

In the course of a clutch connecting motion, the clutch connecting motion unit 16 operates the clutch actuator 41 on the basis of a connecting speed communicated from the clutch connecting speed varying unit 14. In the case where the clutch connecting speed varying unit 14 stops communication of a connecting speed, motions of the clutch actuator 41 are stopped.

The gear movement completion judging unit 21 acquires gear position information from the gear position sensor 93. After the clutch starts a disconnecting motion, a gear position is monitored on the basis of the gear position information and it is judged whether gear movements are completed. In a stage, in which the gears reach positions corresponding to their number of speeds, it is judged that gear movements are completed. Judging that gear movements are completed, the clutch rotating speed difference calculating unit 12 communicates such judgment to the clutch connecting speed varying unit 14 and the second connecting motion starting clutch position acquiring unit 13.

The second connecting motion starting clutch position acquiring unit 13 acquires a second connecting motion starting clutch position on the basis of a clutch rotating speed difference at a point of time when gear movements are completed. A second connecting motion is started from a point of time when the second connecting motion starting clutch position is reached.

Here, a detailed explanation is given to acquisition of a second connecting speed motion clutch position by the second connecting motion starting clutch position acquiring unit 13. The second connecting motion starting clutch position acquiring unit 13 beforehand stores a second connecting motion starting clutch position map, in which a second connecting motion starting clutch position and a clutch rotating speed difference correspond to each other. In the second connecting motion starting clutch position map, a second connecting motion starting clutch position is set between a completely disconnected state and a completely connected state of the clutch. Receiving a communication to the effect that gear movements are completed, from the gear movement completion judging unit 21, the second connecting motion starting clutch position acquiring unit 13 acquires clutch rotating speed difference information from the clutch rotating speed difference calculating unit 12. The second connecting motion starting clutch position acquiring unit 13 acquires a second connecting motion starting clutch position, which corresponds to the clutch rotating speed difference thus acquired, from the second connecting motion starting clutch position map. The second connecting motion starting clutch position is communicated to the clutch connecting speed varying unit 14.

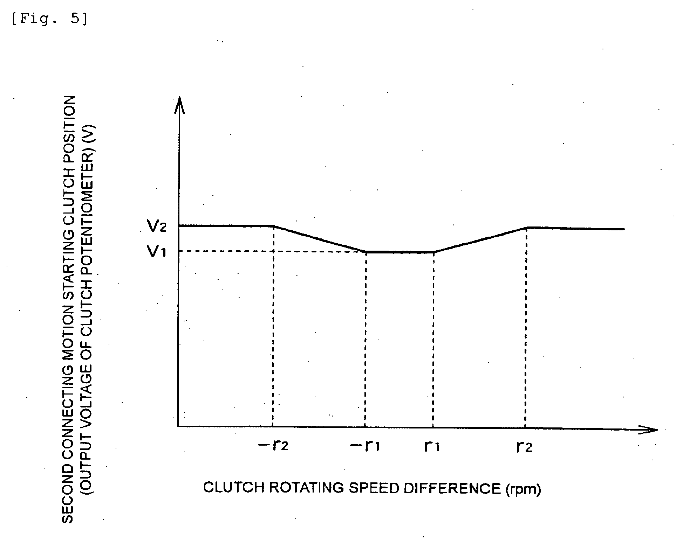

Fig. 5 shows the second connecting motion starting clutch position map. In the figure, an axis of abscissa indicates a clutch rotating speed difference obtained by subtracting a main-shaft side clutch rotating speed from an engine-side clutch rotating speed. An axis of ordinate indicates a second connecting motion starting clutch position.

As shown in the figure, a second connecting motion starting clutch position is set to assume a constant value (v₁ in the figure) in an interval from 0 rpm to a predetermined rotating speed difference r₁ of an absolute value of a clutch rotating speed difference. The position is set to increase in proportion to a rotating speed difference in an interval from r₁ to a predetermined rotating speed difference r₂, which is set to be larger than r₁, and to assume again a constant value (v₂ in the figure) in the case where the absolute value is equal to or larger than the predetermined rotating speed difference r₂. By doing this, in the case where an absolute value of a clutch rotating speed difference at a point of time when gear movements are completed corresponds to r₁ to r₂, setting is made so that a clutch position, in which a second connecting motion is started, increases in proportion to a magnitude of a clutch rotating speed difference. That is, in the case where a clutch rotating speed difference is large, setting is made so that a second connecting motion is started from an early time in a clutch connecting motion as compared with the case where a clutch rotating speed difference is small. By doing this, an impact on the vehicle at the time of clutch connection is reduced and a further smooth clutch connecting motion is realized.

In the course of a clutch connecting motion, the clutch connecting speed varying unit 14 communicates a clutch connecting speed to the clutch connecting motion unit 16. Specifically, a first connecting speed, which does not vary with time, is communicated to the clutch connecting motion unit 16 in the first connecting motion. Thereafter, in the course of a second connecting motion, the clutch connecting speed varying unit 14 varies a second connecting speed every a predetermined period of time according to clutch rotating speed difference information. The second connecting speed thus varied is sequentially communicated to the clutch connecting motion unit 16. After the second connecting motion is terminated, a third connecting speed, which does not vary with time, is again communicated to the clutch connecting motion unit 16 in the third connecting motion.

A further detailed explanation is given to the function of the clutch connecting speed varying unit 14. At a point of time when it is communicated from the gear movement completion judging unit 21 that movements of gears is completed, the clutch connecting speed varying unit 14 begins to communicate a first connecting speed, which is beforehand stored in the clutch connecting speed varying unit 14, to the clutch connecting motion unit 16. The clutch connecting motion unit 16 operates the clutch actuator 41 on the basis of the clutch connecting speed (a first connecting motion). At the start of a first connecting motion, a second connecting motion starting clutch position is communicated to the clutch connecting speed varying unit 14 from the second connecting motion starting clutch position acquiring unit 13. In the first connecting motion, the clutch connecting speed varying unit 14 monitors a clutch position on the basis of clutch position information acquired from the clutch potentiometer 44 to judge whether a clutch position reaches the second connecting motion starting clutch position. At a point of time when it is determined that a clutch position reaches the second connecting motion starting clutch position, communication to the clutch connecting motion unit 16 is stopped. The clutch connecting speed varying unit 14 acquires a second connecting speed determined according to clutch rotating speed difference information acquired from the clutch rotating speed difference calculating unit 12, and begins to communicate the second connecting speed to the clutch connecting motion unit 16.

Here, a detailed explanation is given to acquisition of a second connecting speed by the clutch connecting speed varying unit 14. Acquisition of a second connecting speed is performed on the basis of the second connecting speed map beforehand stored in a clutch connecting speed storage unit 15, which forms the clutch connecting speed varying unit 14. Specifically, the second connecting speed map is stored, in which a clutch rotating speed and a second connecting speed correspond to each other. The clutch connecting speed varying unit 14 acquires from the map a second connecting speed actually corresponding to a clutch rotating speed difference acquired from the clutch rotating speed difference calculating unit 12. The second connecting speed thus acquired is communicated to the clutch connecting motion unit 16 and the clutch actuator 41 starts a second connecting motion. In the course of the second connecting motion, frequency, in which a second connecting speed is varied, is every a predetermined period of time. That is, the clutch connecting speed varying unit 14 acquires clutch rotating speed difference information every a predetermined period of time (for example, every 1 msec) from the clutch rotating speed difference calculating unit 12. A second connecting speed corresponding to the clutch rotating speed difference information is acquired from the second connecting speed map, and the second connecting speed is sequentially communicated to the clutch connecting motion unit 16. The clutch connecting motion unit 16 operates the clutch actuator 41 on the basis of the second connecting speed sequentially communicated. By doing this, the clutch can be connected at the clutch connecting speed corresponding to the clutch rotating speed difference in the second connecting motion, and connection of the clutch is made smoothly.

In the second connecting motion, the clutch connecting speed varying unit 14 judges whether a clutch position and a clutch rotating speed difference meet the second connecting motion terminating condition. At a point of time when both a clutch position and a clutch rotating speed difference meet the second connecting motion terminating condition (when the second connecting motion is terminated), the clutch connecting speed varying unit 14 stops communication of a second connecting speed to the clutch connecting motion unit 16 and starts communication of a third connecting speed. In addition, at a point of time when a clutch position and a clutch rotating speed difference meet the second connecting motion terminating condition, the clutch connecting speed varying unit 14 communicates such judgment to the shift actuator control unit 19.

In a third connecting motion, the clutch connecting speed varying unit 14 monitors a clutch position on the basis of clutch position information. At a point of time when it is judged that the clutch reaches the completely connected state (a clutch connected state in the case where a vehicle travels normally), communication of a third connecting speed to the clutch connecting motion unit 16 is stopped whereby motions of the clutch actuator 41 are stopped.

Here, a detailed explanation is given to the second connecting speed map stored in the clutch connecting speed storage unit 15. The second connecting speed map is stored every number of speeds, in which a clutch rotating speed difference and a second connecting speed correspond to each other. The second connecting speed map is set so that in an interval, in which an absolute value of a clutch rotating speed difference assumes a value between a predetermined value r₁ and a predetermined value r₂, which is smaller than r₁, a second connecting speed also becomes slow as an absolute value of a clutch rotating speed difference decreases. A second connecting speed is set to assume a minimum value at the predetermined value r₂. In the case where an absolute value of a clutch rotating speed difference is smaller than the predetermined value r₂, a second connecting speed is set to assume its minimum value irrespective of variation in the absolute value of the clutch rotating speed difference. Also, different maps are prepared to be applied at the time of shift-up and at the time of shift-down. By doing this, it is possible to simplify calculation in the case where the clutch connecting speed varying unit 14 acquires a second connecting speed to perform the processing of acquiring a second connecting speed in a short time. It is possible to rapidly acquire an optimum clutch connecting speed every number of speeds.

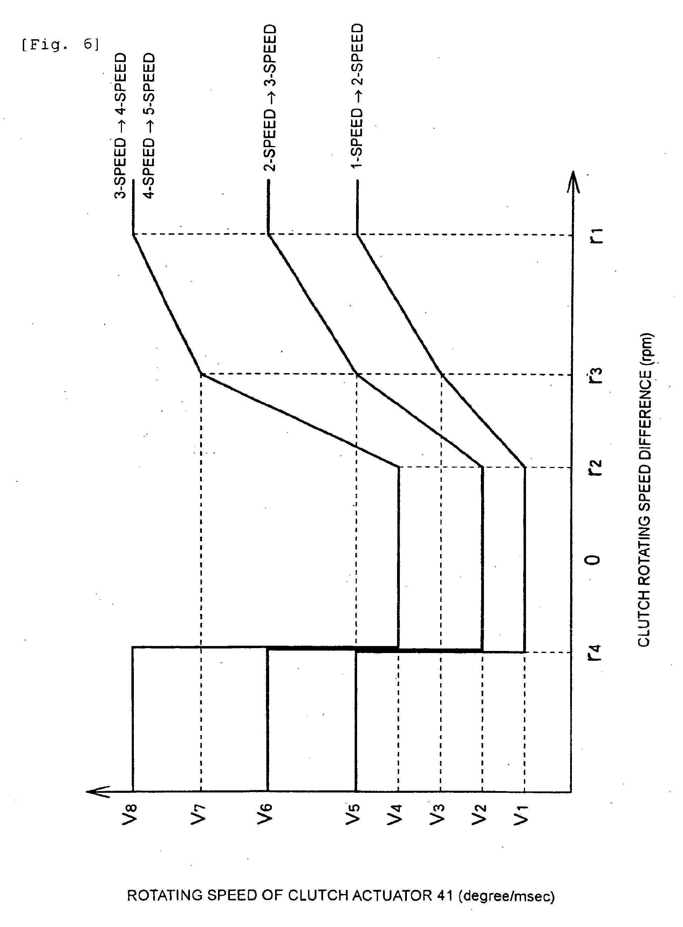

An explanation is given to a second connecting speed map, which is applied at the time of shift-up, with reference to Fig. 6. An axis of abscissa indicates a clutch rotating speed difference found by subtracting a rotating speed of the member on the main-shaft side from a rotating speed of the member on the engine-side of the clutch, and an axis of ordinate indicates a rotating speed of the clutch actuator 41 corresponding to a second connecting speed.

As shown in the figure, setting is made at any number of speeds in the second connecting speed map so that in the case where a clutch rotating speed difference is in the range from a predetermined rotating speed difference r₁ to another rotating speed difference r₂, which is set to be smaller than r₁, a second connecting speed is made slow as a clutch rotating speed difference decreases. A rate, at which a clutch connecting speed is made slow, is increased at a predetermined rotating speed difference r₃, which is set between predetermined rotating speed differences r₁ and r₂. In the case where a clutch rotating speed difference is in the range from a predetermined rotating speed difference r₂ to another rotating speed difference r₄, which is set to be smaller than r₂, a clutch connecting speed is set to assume a constant value (V1 or V2 or V4 in the figure). Also, in the case where abnormality occurs in the operation of the engine or driving of the vehicle at the time of shift-up, the member on the main-shaft side of the clutch becomes larger in rotating speed than the member on the engine-side, and a clutch rotating speed difference becomes equal to or less than the predetermined rotating speed difference r₄, a clutch connecting speed (V5 or V6 or V8 in the figure) is set to be faster than that in the case where a clutch rotating speed difference is in the range from the predetermined rotating speed difference r₂ to r₄.

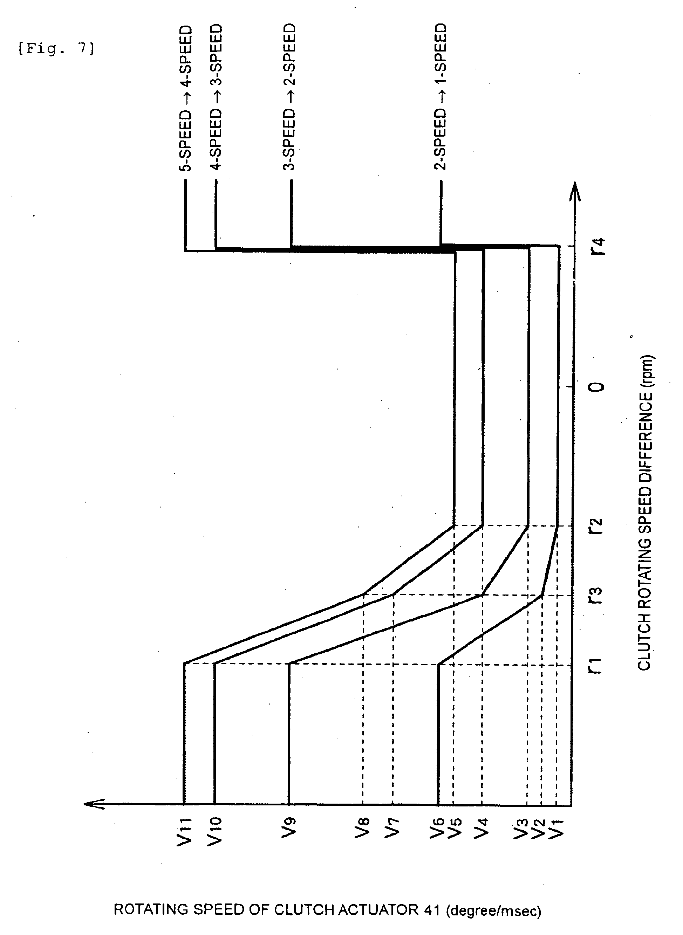

An explanation is given to a second connecting speed map, which is applied at the time of shift-down, with reference to Fig. 7. In the figure, an axis of abscissa indicates a clutch rotating speed difference found by subtracting a rotating speed of the member on the main-shaft side from a rotating speed of the member on the engine-side of the clutch, and an axis of ordinate indicates a rotating speed of the clutch actuator 41 corresponding to a second connecting speed.

Setting is made in the second connecting speed map at the time of shift-down so that in the case where a clutch rotating speed difference is in the range from a predetermined rotating speed difference r₁ to another rotating speed difference r₂, an absolute value of which is set to be smaller than r₁, a second connecting speed is made slow as an absolute value of a clutch rotating speed difference decreases. A rate, at which a clutch connecting speed is made slow, is increased at a predetermined rotating speed difference r₃, which is set between predetermined rotating speed differences r₁ and r₂. In the case where a clutch rotating speed difference is in the range from a predetermined rotating speed difference r₂ to another rotating speed difference r₄, which is set to be smaller than r₂, a clutch connecting speed is set to assume a constant value (V1, V3, V4, or V5 in the figure). Also, like at the time of shift-up, also at the time of shift-down, in the case where abnormality occurs in the operation of the engine or driving of the vehicle, the member on the engine-side of the clutch becomes larger in rotating speed than the member on the main-shaft side, and a clutch rotating speed difference becomes equal to or less than a predetermined rotating speed difference r₄, setting is made so that connection of the clutch is performed at a higher speed than that in the case where a clutch rotating speed difference is in the range from the predetermined rotating speed difference r₂ to r₄.

As shown in Figs. 6 and 7, second connecting speed maps are prepared every number of speeds both at the time of shift-up and at the time of shift-down. In making a comparison among clutch connecting speeds every number of speeds in terms of the same clutch rotating speed difference, a second connecting speed in a large number of speeds is set to become one equal to or larger than a connecting speed in a smaller number of speeds than the large number of speeds. For example, as shown in Figs. 6 and 7, with the same clutch rotating speed difference, a clutch connecting speed in case of change of speed from 4-speed to 5-speed is set to be equal to or faster than that in case of change of speed from 3-speed to 4-speed. Also, a clutch connecting speed in case of change of speed from 3-speed to 4-speed is set to be equal to or faster than that in case of change of speed from 1-speed to 2-speed. By doing this, it is possible to acquire a clutch connecting speed corresponding to a speed reduction ratio to improve a riding comfort at the time of clutch connection.

Subsequently, explanation is given to the function of the shift actuator control unit 19. The shift actuator control unit 19 turns the shift actuator 51 from a reference angle to a shift maximum turning angle after the lapse of a predetermined period of time, described later, from a point of time when change of speed is instructed by a rider (a shift motion). Here, the reference angle is a neutral turning angle, at which a turning angle of the shift actuator 51 is not turned to both sides in a shift-up direction or in a shift-down direction. Also, the shift maximum turning angle is a turning angle, which is necessary and sufficient for shift-up or shift-down once. The shift actuator 51 turns and so the shift cam shaft also rotates whereby the gear engaged by a shift fork is moved.

After receiving from the clutch actuator control unit 11 a communication to the effect that the clutch meets the second connecting motion terminating condition, the shift actuator control unit 19 performs a motion to return the shift actuator 51 to the reference angle (a shift return motion). In addition, while the shift cam shaft also rotates interlocking with turning of the shift actuator 51 in the course of a shift motion, the shift cam shaft does not interlock and the shift cam shaft is maintained in a rotated position in the shift return motion.

A further detailed explanation is given to the function of the shift actuator control unit 19. When speed change instructing information is communicated from the shift-up switch 91 or the shift-down switch 96, the shift actuator control unit 19 counts time elapsed from such point of time. When it is judged that time elapsed from a point of time when speed change instructing information is communicated reaches a predetermined time (a shift motion start lag time), the shift actuator control unit 19 turns the shift actuator 51 in a direction, which corresponds to contents of speed change instructions (a shift motion). In the course of a shift motion, the shift actuator control unit 19 monitors a turning angle of the shift actuator 51 on the basis of shift-actuator turning angle information acquired from the shift potentiometer 54. The shift actuator control unit 19 judges whether the shift actuator 51 the shift maximum turning angle. At a point of time when the shift actuator 51 reaches the shift maximum turning angle, the shift actuator control unit 19 stops the shift actuator 51. The shift actuator 51 stops at the maximum turning angle.

Thereafter, at point of time when a clutch position and a clutch rotating speed difference meet the second connecting motion terminating condition, the shift actuator control unit 19 receives a communication to such effect from the clutch connecting speed varying unit 14. Receiving such communication, the shift actuator control unit 19 turns the shift actuator 51 in a direction, in which the shift actuator is returned to the reference angle (a shift return motion). In the course of a shift return motion, the shift actuator control unit 19 judges on the basis of shift-actuator turning angle information whether the shift actuator 51 reaches the reference angle. At a point of time when the shift actuator 51 reaches the reference angle, the shift actuator control unit 19 stops motions of the shift actuator 51.

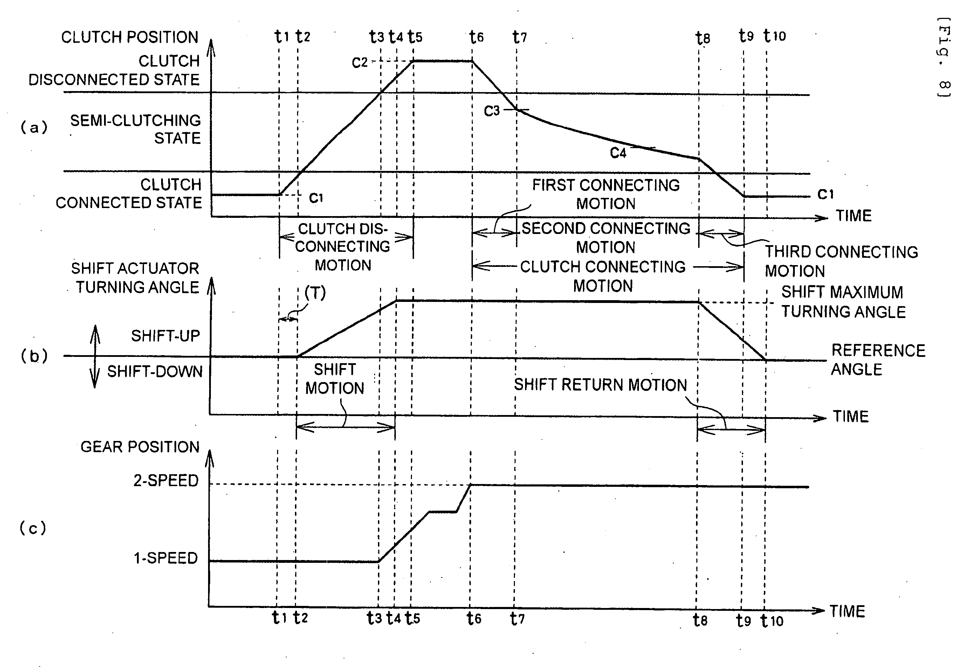

That time-variation of a clutch position at the time of shift-up, a turning angle of the shift actuator 51 and a gear position, which is realized by the function of the main microcomputer 1 described above, will be described with reference to Fig. 8. In Fig. 8, Fig. 8(a) illustrates time-variation of a clutch position, Fig. 8(b) illustrates time-variation of a turning angle of the shift actuator 51, and Fig. 8(c) illustrates time-variation of a gear position.

First, when a rider makes the shift-up switch 91 ON, the clutch disconnecting motion unit 18 starts motions of the clutch actuator 41, and so a clutch disconnecting motion is started (Fig. 8, t₁). In a clutch disconnecting motion, the clutch disconnecting motion unit 18 judges on the basis of clutch position information whether the clutch reaches a completely disconnected state (Fig. 8, a clutch position C₂). At a point of time when the clutch reaches the completely disconnected state, motions of the clutch actuator 41 are stopped and the clutch is maintained in the completely disconnected state (Fig. 8, t₅).

On the other hand, after a shift motion lag time (T) has lapsed since a point of time when the shift-up switch 91 is made ON, the shift actuator control unit 19 starts motions of the shift actuator 51. Thereby, a shift motion is started (Fig. 8, t₂). At a point of time when a turning angle of the shift actuator reaches the shift maximum turning angle, motions of the clutch actuator 51 are stopped and the clutch actuator 51 is maintained at the shift maximum turning angle (Fig. 8, t₄). Motions of the clutch actuator 51 cause the shift cam shaft to rotate and a sliding gear begins to move on a spline on a main shaft or a counter shaft (Fig. 8, t₃). After the lapse of a predetermined period of time after the movement is started, the sliding gear engages with a mating driven-side gear and movements of the gears are completed (Fig. 8, t₆). In addition, the reason why there is time, during which the sliding gear is not varied in position with time, while the sliding gear moves is that a dog of the sliding gear and a dog of the driven-side gear do not engage smoothly with each other but strike against each other (collision of the dogs). After collision of the dogs, the sliding gear or the driven-side gear rotates whereby collision of the dogs is dissolved and movement of the sliding gear is completed.

Having detected that movements of the gears are completed, the gear movement completion judging unit 21 communicates such detection to the second connecting motion starting clutch position acquiring unit 13 and the clutch connecting speed varying unit 14. The second connecting motion starting clutch position acquiring unit 13 acquires a second connecting motion starting clutch position (Fig. 8, a clutch position C₃) from a clutch rotating speed difference, and the second connecting motion starting clutch position is communicated to the clutch connecting speed varying unit 14.

The clutch connecting speed varying unit 14 communicates a first connecting speed to the clutch connecting motion unit 16 from a point of time when movements of the gears are completed, whereby a first connecting motion is started. The first connecting speed is maintained up to the second connecting motion starting clutch position. The clutch connecting speed varying unit 14 monitors a clutch position in a first connecting motion and stops communication of the first connecting speed to the clutch connecting motion unit 16 at a point of time when it is determined that the second connecting motion starting clutch position is reached (Fig. 8, t₇). Thereby, the first connecting motion is terminated.

At a point of time when the clutch reaches the second connecting motion starting clutch position, the clutch connecting speed varying unit 14 begins to acquire a second connecting speed from the second connecting speed map, and the second connecting speed is sequentially communicated to the clutch connecting motion unit 16. Thereby, a second connecting motion is started. In the second connecting motion, a second connecting speed is gradually varied every a predetermined period of time on the basis of the second connecting speed map.

At a point of time when it is determined that a clutch position and a clutch rotating speed difference meet the second connecting motion terminating condition, that is, the condition that a clutch rotating speed difference is equal to or less than a second connecting motion termination enabling rotating speed difference and a clutch position is equal to or less than a second connecting motion termination enabling position (Fig. 8, a clutch position C₄), the clutch connecting speed varying unit 14 stops acquisition of a second connecting speed and begins to communicate a third connecting speed to the clutch connecting motion unit 16. Thereby, a second connecting motion is terminated and a third connecting speed is started (Fig. 8, t₈). In the third connecting motion, at a point of time when it is determined that the clutch reaches the completely connected state (Fig. 8, a clutch position C₁), the clutch connecting speed varying unit 14 stops communication of a third connecting speed to the clutch connecting motion unit 16 and stops motions of the clutch actuator 41 (Fig. 8, t₉).

On the other hand, when the second connecting motion is terminated, the clutch connecting speed varying unit 14 communicates the advent of termination of the second connecting motion to the shift actuator control unit 19. After the second connecting motion is terminated, the shift actuator control unit 19 starts a shift return motion to return the shift actuator 51 to the reference angle (Fig. 8, t₈). At a point of time when it is determined that a turning angle of the shift actuator 51 reaches the reference angle, the shift actuator control unit 19 stops motions of the shift actuator 51 (Fig. 8, t₁₀).

In this manner, according to the embodiment, the clutch is connected at a constant first connecting speed faster than a second connecting speed in the course of a connecting motion until it reaches a second connecting motion starting clutch position set between the completely disconnected state and the completely connected state of the clutch. After the clutch reaches the second connecting motion starting clutch position, it is connected at that second connecting speed, which is varied every a predetermined period of time according to variation in clutch rotating speed difference. At a point of time when a clutch rotating speed difference and a clutch position meet the second connecting motion terminating condition, the clutch is connected at a third connecting speed, which is constant with time.

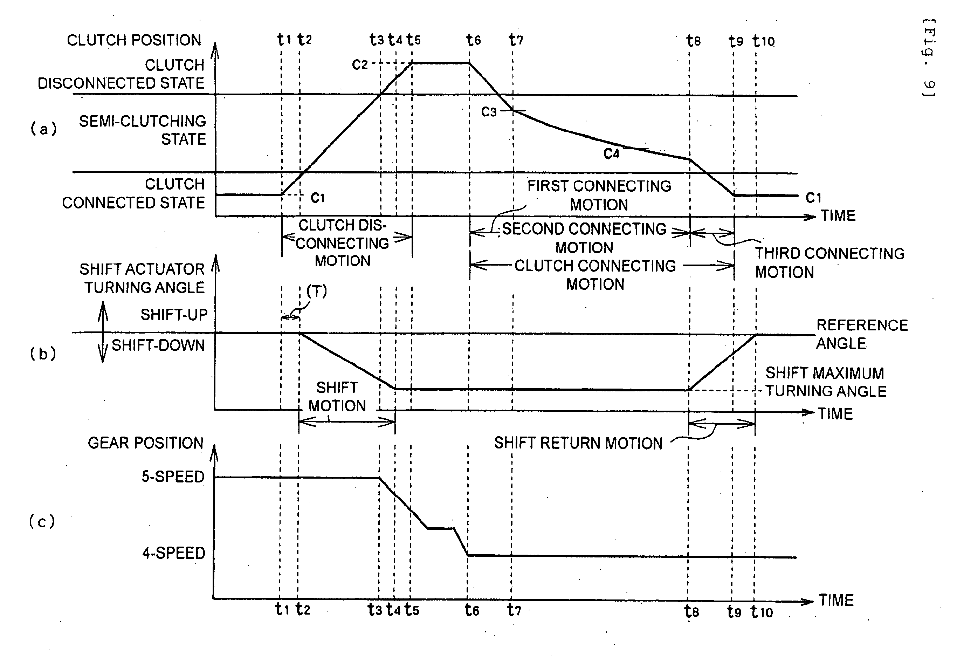

Fig. 9 is a view illustrating, at the time of shift-down, time-variation of a clutch position, a turning angle of the shift actuator 51, and a gear position. Also, in the figure, Fig. 9(a) illustrates time-variation of a clutch position, Fig. 9(b) illustrates time-variation of a turning angle of the shift actuator 51, and Fig. 9(c) illustrates time-variation of a gear position.

Also, at the time of shift-down, after shift-down instructions are communicated and after a disconnecting motion of the clutch is performed in the same manner as at the time of shift-up, connecting and disconnecting motions of the clutch are performed in the order of a first connecting motion, a second connecting motion, and a third connecting motion. That is, from a point of time when shift-down instructions are communicated to the clutch disconnecting motion unit 18, disconnecting motions of the clutch are started (Fig. 9, t₁). From a point of time when the clutch reaches the completely disconnected state and movements of the gears are completed, connecting motions of the clutch are started (Fig. 9, t₆). The clutch is connected at a first connecting speed, which is constant with time, in the course of a connecting motion until the clutch reaches the second connecting motion starting clutch position set between the completely disconnected state and the completely connected state of the clutch (Fig. 9, t₇). After the clutch reaches the second connecting motion starting clutch position, the clutch is connected at that second connecting speed, which is varied every a predetermined period of time according to variation in clutch rotating speed difference. At a point of time when a clutch rotating speed difference and a clutch position meet the second connecting motion terminating condition, the clutch is connected at a third connecting speed, which is constant with time (Fig. 9, t₈). At a point of time when the clutch reaches the completely connected state, a connecting motion of the clutch is terminated and the clutch is maintained in the completely connected state (Fig. 9, t₉).

Also, at the time of shift-down, after a shift motion lag time (T) has lapsed since shift-down instructions are given, the shift actuator 51 rotates in a direction opposed to one at the time of shift-up and a shift motion is stated (Fig. 9, t₂). After the shift maximum turning angle is reached, a turning angle is maintained. At a point of time when a clutch position and a clutch rotating speed difference meet the second connecting motion terminating condition, a shift return motion is started (Fig. 9, t₈). At a point of time when a turning angle of the shift actuator reaches the reference angle, the shift actuator 51 is stopped in motion (Fig. 9, t₁₀).

For a gear position, the shift actuator 51 begins a shift motion whereby the sliding gear begins movement (Fig. 9, t₃). After the sliding gear begins movement, the sliding gear and the driven-side gear engage with each other after collision of the dogs of the sliding gear and the driven-side gear (Fig. 9, t₆).

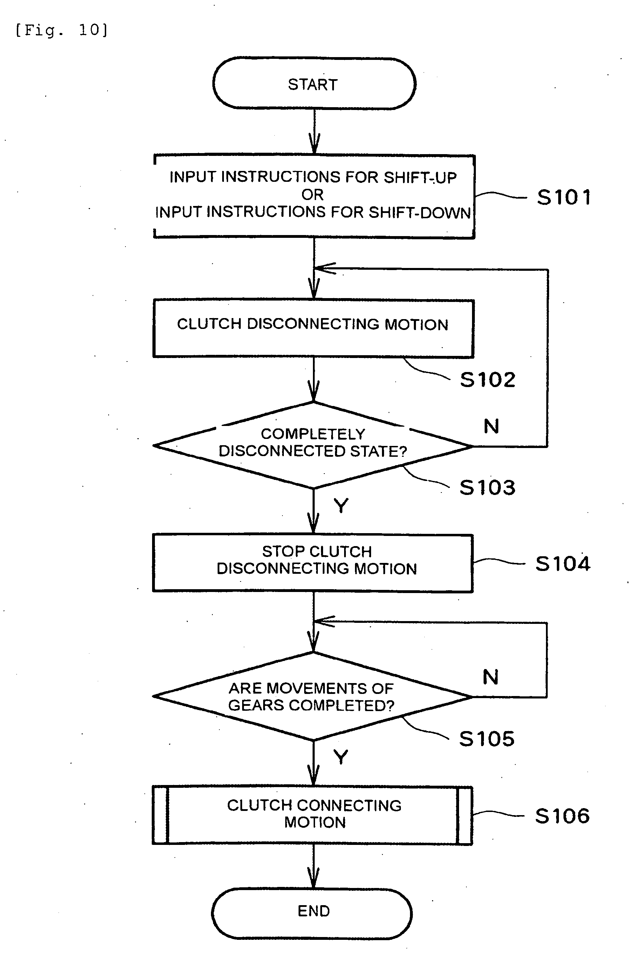

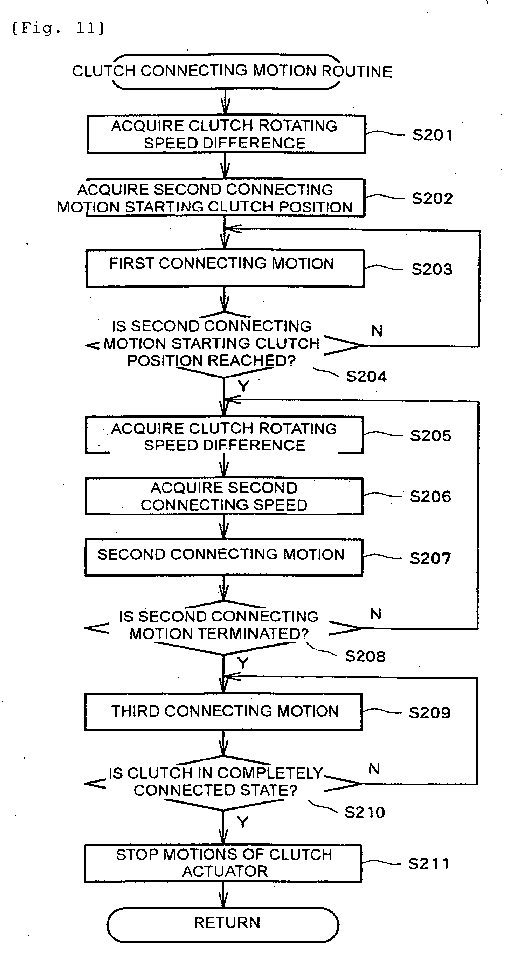

Control-flow of the clutch actuator control unit 11 at the time of shift-up or at the time of shift-down is described with reference to Figs. 10 and 11. When speed change instructing information is communicated (S101), the clutch disconnecting motion unit 18 begins a clutch disconnecting motion (S102). In the course of a clutch disconnecting motion, the clutch disconnecting motion unit 18 judges on the basis of clutch position information whether the clutch reaches the completely disconnected state (S103). At a point of time when it is determined that the completely disconnected state is reached, motions of the clutch actuator 41 are stopped (S104). In the clutch disconnecting motion, the gear movement completion judging unit 21 acquires gear position information from output voltage of the gear position sensor 93 to judge whether movements of the gears are completed (S105). Until completion of movements of the gears, acquisition of gear position and judgment of completion or incompletion are repeated (S105). When it is judged that movements of the gears are completed, the gear movement completion judging unit 21 communicates such judgment to the second connecting motion starting clutch position acquiring unit 13 and the clutch connecting speed varying unit 14 and a clutch connecting motion is started (S106).

Fig. 11 is a control flowchart illustrating the clutch connecting motion (S106) in detail. At a point of time when receiving from the gear movement completion judging unit 21 a communication to the effect that gearing is completed, the second connecting motion starting clutch position acquiring unit 13 acquires clutch rotating speed difference information from the clutch rotating speed difference calculating unit 12 (S201). On the basis of the clutch rotating speed difference, the second connecting motion starting clutch position acquiring unit 13 acquires a second connecting motion starting clutch position from the second connecting motion starting clutch position map (S202). The second connecting motion starting clutch position acquiring unit 13 communicates the acquired second connecting motion starting clutch position to the clutch connecting speed varying unit 14. The clutch connecting speed varying unit 14 begins to communicate a first connecting speed to the clutch connecting motion unit 16 whereby a first connecting motion is started (S203).

In the first connecting motion, the clutch connecting speed varying unit 14 judges on the basis of clutch position information whether a clutch position reaches the second connecting motion starting clutch position (S204). The first connecting motion continues until the second connecting motion starting clutch position is reached. At a point of time when a clutch position reaches the second connecting motion starting clutch position, the clutch connecting speed varying unit 14 acquires clutch rotating speed difference information from the clutch rotating speed difference calculating unit 12 (S205) and acquires, on the basis of the clutch rotating speed difference information, a second connecting speed from the second connecting speed map stored in the clutch connecting speed storage unit 15 (S206). The second connecting speed is communicated to the clutch connecting motion unit 16, connection of the clutch is performed at the second connecting speed, and a second connecting motion is started (S207). In the second connecting motion, the clutch connecting speed varying unit 14 acquires clutch rotating speed difference information and clutch position information to judge whether a clutch rotating speed difference and a clutch position meet the second connecting motion terminating condition (S208). In the case where the second connecting motion terminating condition is not met, the procedure returns again to the processing of S205 to perform connection of the clutch at a second connecting speed, which is varied according to the clutch rotating speed difference.

In the second connecting motion, when it is determined that a clutch position and a clutch rotating speed difference meet the second connecting motion terminating condition (S208), the clutch connecting speed varying unit 14 terminates communication of a second connecting speed to the clutch connecting motion unit 16 and begins to communicate a third connecting speed thereto (S209). Thereby, a third connecting motion is started. In the third connecting motion, the clutch connecting speed varying unit 14 monitors a clutch position on the basis of clutch position information to judge whether the clutch reaches the completely connected state (S210). In the case where the clutch reaches the completely connected state, the clutch connecting speed varying unit 14 terminates communication of a second connecting speed to the clutch connecting motion unit 16 and the clutch connecting motion unit 16 stops motions of the clutch actuator 41. Thereby, a connecting motion of the clutch is terminated (S211). On the other hand, in the case where the clutch does not reach the completely connected state, the processings of S209 and S210 are repeated. That is, the third connecting motion is continued, during which the clutch connecting speed varying unit 14 continues to monitor a clutch position to judge whether the clutch reaches the completely connected state (S210).

According to the embodiment, in the second connecting motion, the clutch connecting speed varying unit 14 varies a second connecting speed from the second connecting speed map on the basis of variation in clutch rotating speed difference. Such variation is made every a predetermined period of time. Accordingly, in the case where a rider manipulates the vehicle to vary a clutch rotating speed difference in the course of the second connecting motion, a connecting motion of the clutch can be performed at a speed corresponding to such variation and so the clutch can be connected at an optimum speed suited to manipulation of the vehicle by a rider.

Also, according to the embodiment, the clutch connecting speed storage unit 15 stores a second connecting speed map every number of speed. By doing this, it is possible to acquire a clutch connecting speed corresponding to a speed reduction ratio to improve a riding comfort in the course of a clutch connecting motion.

In addition, the teaching of the present invention is not limited to the embodiment described above.

While according to the embodiment, in acquiring a second connecting speed, the clutch connecting speed storage unit 15 beforehand stores a second connecting speed in correspondence with a clutch rotating speed difference, acquisition of a second connecting speed is not limited thereto but a second connecting speed can also be found corresponding to the acquired clutch rotating speed difference by beforehand storing a formula indicative of the relationship between a clutch rotating speed difference and a second connecting speed.

Also, according to the embodiment, a clutch rotating speed difference is detected every 1 msec. However, detection of a clutch rotating speed difference is not limited to one performed every 1 msec but it suffices to be performed every a short period of time as compared with a period of time, which is required for a connecting motion of the clutch. A smooth connecting motion of the clutch is realized even within, for example, a short period of time in the order of several msec. In addition, in the case where the rotating speed of the member on the engine-side of the clutch or the member on the main-shaft side of the clutch is detected only once in one engine cycle, a clutch rotating speed difference may be detected every one engine cycle. Also, when a clutch rotating speed difference is detected in the same cycle as the control cycle of the clutch actuator 41, wasteful detection of a clutch rotating speed difference can be eliminated. That is, in the case where a clutch rotating speed difference is detected in a smaller cycle than the control cycle of the clutch actuator 41, clutch rotating speed difference information, which is not made use of for control of the clutch actuator 41, is generated. Accordingly, by detecting a clutch rotating speed difference in the same cycle as the control cycle of the clutch actuator 41, it is possible to eliminate generation of clutch rotating speed difference information, which is not made use of for control of the clutch actuator 41.

Also, according to the embodiment, a clutch connecting speed is acquired only in the second connecting motion on the basis of the second connecting speed map, in which a clutch rotating speed difference and a clutch connecting speed are stored in correspondence with each other. However, a clutch connecting speed is not limited to this. A clutch connecting speed may be acquired from the beginning of a connecting motion of the clutch on the basis of, for example, a connecting speed map, in which a clutch rotating speed difference and a clutch connecting speed are stored in correspondence with each other. In the connecting speed map in this case, it suffices that connection of the clutch be made at a speed, which is set to be faster than a second connecting speed, until a clutch rotating speed difference becomes equal to or less than a predetermined threshold.

Also, according to the embodiment, connection of the clutch is made at a third connecting speed, which is constant with time, from a point of time when a clutch position and a clutch rotating speed difference meet the second connecting motion terminating condition. However, a connecting motion of the clutch is not limited to this. For example, a clutch connecting speed may be acquired on the basis of that connecting speed map, in which a clutch rotating speed difference and a clutch connecting speed are made in correspondence with each other, until the clutch reaches the completely connected state without setting the second connecting motion terminating condition. A connecting speed map in this case may be set so that a clutch connecting speed becomes faster than a second connecting speed in the case where a clutch rotating speed difference becomes equal to or less than a predetermined threshold.

Also, according to the embodiment, a rotating speed of the member on the engine-side of the clutch is detected by the clutch rotating speed sensor 94 mounted to the member on the drive-side of the clutch. However, acquisition of a rotating speed of the member on the engine-side of the clutch is not limited to this. A rotating speed of the member on the engine-side of the clutch may detected on the basis of, for example, frequency, in which a crank pulse signal output from a crank pulse sensor mounted to a crank of the engine, is detected. Likewise, according to the invention, a rotating speed of a member on a main-shaft side of the clutch is detected by the main-shaft side clutch rotating speed sensor 95 mounted to a member on a driven-shaft side of the clutch. However, detection of a rotating speed of the member on the main-shaft side of the clutch is not limited to this. For example, a rotating speed of the member on the main-shaft side of the clutch may be detected by calculation based on a vehicle speed and a gear reduction ratio.

The description above discloses (amongst others) an embodiment of a clutch connection control device for connection and disconnection of a clutch through actuation of a clutch actuator, comprising clutch rotating speed difference detecting means that detects a clutch rotating speed difference being a difference in rotating speed between a drive side and a driven side of the clutch, clutch connecting speed varying means that varies a clutch connecting speed according to variation in the clutch rotating speed difference detected by the clutch rotating speed difference detecting means, and clutch connecting means that causes the drive side and the driven side of the clutch to approach each other at the clutch connecting speed varied by the clutch connecting speed varying means.

Also, the description above discloses an embodiment of a clutch connection control method for connection and disconnection of a clutch through actuation of a clutch actuator, comprising the steps of detecting a clutch rotating speed difference being a difference in rotating speed between a drive side and a driven side of the clutch, varying a clutch connecting speed according to variation in the clutch rotating speed difference detected by the clutch rotating speed difference detecting step, and causing the drive side and the driven side of the clutch to approach each other at the clutch connecting speed varied by the clutch connecting speed varying step.

According to the teaching of these embodiments, a clutch rotating speed difference is detected, a clutch connecting speed is varied according to variation in the clutch rotating speed difference, and the drive side and the driven side of the clutch are caused to approach each other at the clutch connecting speed. Therefore, even in the case where manipulation, such as braking, operation of a throttle, etc., of a vehicle by a rider is made in the course of a clutch connecting motion and a clutch rotating speed difference is varied thereby, it is possible to vary a clutch connecting speed according to the variation to make connection of the clutch at the speed. As a result, it is possible to flexibly answer to manipulation of a vehicle by a rider to make connection of the clutch at an optimum speed suited to manipulation of the vehicle by the rider.

A further embodiment has a feature in that the clutch rotating speed difference detecting means detects the clutch rotating speed difference every a predetermined period of time. According to this embodiment, it is possible to detect a clutch rotating speed difference, which gradually varies in the course of a clutch connecting motion, every a predetermined period of time with the result that it is possible to vary a clutch connecting speed every a predetermined period of time. Here, the predetermined period of time is very short as compared with time required for connection of a clutch, and set in the order of, for example, several msec. By doing this, it becomes possible to smoothly vary a clutch connecting speed to improve a riding comfort of a vehicle in the course of a clutch connecting motion.

A further embodiment has a feature in that the clutch connecting speed varying means further comprises clutch connecting speed storage means that stores a map indicative of the relationship between the clutch rotating speed difference and the clutch connecting speed, and the clutch connecting speed varying means varies the clutch connecting speed corresponding to the clutch rotating speed difference, from the clutch connecting speed storage means.

According to this embodiment, a clutch connecting speed varied by the clutch connecting speed varying means is beforehand stored in the map indicative of the relationship between the clutch rotating speed difference and the clutch connecting speed, so that when a clutch connecting speed is to be varied, it is possible to readily acquire a clutch connecting speed. Here, the map indicative of the relationship between the clutch rotating speed difference and the clutch connecting speed comprises data, in which a clutch rotating speed difference and a clutch connecting speed are stored in correspondence with each other, a formula indicative of the relationship between a clutch rotating speed difference and a clutch connecting speed, and the like.

A further embodiment has a feature in that the clutch connecting speed storage means is provided every number of speeds. According to this embodiment, a clutch is connected at a speed corresponding to that number of speeds, which is demanded by instructions of speed change, and it is possible to further improve a riding comfort of a vehicle in the course of a clutch connecting motion.

The description above further discloses a saddle-ride type vehicle mounts thereon the clutch connection control device as discussed above. The saddle-ride type vehicle includes, for example, motorcycles (include bicycles with a motor (motorbikes), scooters), four-wheeled buggies (overall terrain type vehicles), snowmobiles, etc. Saddle-ride type vehicles include a small vehicle body as compared with those of four-wheeled vehicles and an impact in the course of clutch connection is liable to be transmitted to a rider. By applying the clutch connection control device of the invention to saddle-ride type vehicles, it is possible to realize rapid connecting and disconnecting motions of a clutch and to make connection of the clutch smooth to improve a riding comfort of the vehicle.

The description above discloses, as a particularly preferred embodiment, in order to provide a clutch connection control device that makes connection of a clutch at a speed corresponding to variation in clutch rotating speed difference in the course of a clutch connecting motion to be able to flexibly answer to manipulation of a vehicle by a rider, a control device for a clutch that makes connection or disconnection of the clutch through actuation of a clutch actuator 41, a main microcomputer 1 comprises a clutch rotating speed difference calculating unit 12 that detects a clutch rotating speed difference, which is a rotating speed difference between a drive side and a driven side of the clutch, a clutch connecting speed varying unit 14 acquires a clutch connecting speed according to a clutch rotating speed difference detected by the clutch rotating speed difference calculating unit 12, and a clutch connecting motion unit 16 that causes a drive side and a driven side of the clutch to approach each other at the clutch connecting speed.

## Claims

1. Device for controlling connection and disconnection of a clutch by means of a clutch actuator (41), wherein the clutch actuator (41) is controlled based on a difference in rotating speed between drive side and driven side of the clutch,
comprising a clutch actuator control unit (11),
means for detecting the difference in rotating speed between drive side and driven side of the clutch,
means for varying a connecting speed of the clutch, being configured to vary the connecting speed of the clutch according to a detected variation in the difference in rotating speed between drive side and driven side of the clutch, and
means for connecting the clutch configured to cause drive side and driven side of the clutch to approach each other at the variable clutch connecting speed, **characterized in that** the clutch actuator control unit (11) is capable of acquiring the connecting speed of the clutch from the means for varying a connecting speed of the clutch, and means for detecting the difference in rotating speed between a drive side and a driven side of the clutch is configured to repeat detection of the difference in rotating speed every predetermined period of time.

2. Device according to claim 1, wherein the means for varying a connecting speed of the clutch comprises means for storage of a clutch connecting speed, being configured to store a map indicative of a relationship between the rotating speed difference and the connecting speed of the clutch, and wherein the means for varying a connecting speed of the clutch is configured to vary the connecting speed of the clutch corresponding to the rotating speed difference of the clutch, according to the stored relationship.

3. Device according to claim 2, wherein the maps indicative of a relationship between the rotating speed difference and the connecting speed of the clutch are provided every number of speeds.

4. Device according to one of the claims 1 to 3, further comprising a means for varying a starting clutch position at which the connecting speed of the clutch is varied, wherein the starting clutch position is varied according to a detected variation in the difference in rotating speed.

5. Saddle-ride type vehicle comprising the device for controlling connection and disconnection of a clutch according to one the of claims 1 to 4.

6. Method for controlling connection and disconnection of a clutch through actuation of a clutch actuator, comprising the steps of:
detecting a clutch rotating speed difference being a difference in rotating speed between a drive side and a driven side of the clutch, acquiring connecting speed information of the clutch from means for varying a connecting speed of the clutch,
**characterized by**
varying a clutch connecting speed according to variation in the clutch rotating speed difference detected by the clutch rotating speed difference detecting step, thereby repeating detection of the difference in rotating speed every predetermined period of time, and
causing the drive side and the driven side of the clutch to approach each other at the clutch connecting speed varied by the clutch connecting speed varying step.

## Patentansprüche

1. Vorrichtung zum Steuern von Einrücken und Ausrücken einer Kupplung mittels eines Kupplungs-Betätigungselementes (41), wobei das Kupplungs-Betätigungselement (41) auf Basis einer Differenz der Drehgeschwindigkeit zwischen der Antriebsseite und der Abtriebsseite der Kupplung gesteuert wird,
wobei die Vorrichtung umfasst:
eine Steuereinheit (11) für das Kupplungs-Betätigungselement,
eine Einrichtung zum Erfassen der Differenz der Drehgeschwindigkeit zwischen der Antriebsseite und der Abtriebsseite der Kupplung,
eine Einrichtung zum Ändern einer Einrückgeschwindigkeit der Kupplung, die so eingerichtet ist, dass sie die Einrückgeschwindigkeit der Kupplung entsprechend einer erfassten Änderung der Differenz der Drehgeschwindigkeit zwischen der Antriebsseite und der Abtriebsseite der Kupplung ändert, und
eine Einrichtung zum Einrücken der Kupplung, die so eingerichtet ist, dass sie bewirkt, dass sich die Antriebsseite und die Abtriebsseite der Kupplung einander mit der veränderlichen Kupplungs-Einrückgeschwindigkeit nähern,
**dadurch gekennzeichnet, dass** die Steuereinheit (11) für das Kupplungs-Betätigungselement in der Lage ist, die Einrückgeschwindigkeit der Kupplung von der Einrichtung zum Verändern der Einrückgeschwindigkeit der Kupplung zu beziehen, und die Einrichtung zum Erfassen der Differenz der Drehgeschwindigkeit zwischen einer Antriebsseite und einer Abtriebsseite der Kupplung so eingerichtet ist, dass sie Erfassung der Differenz der Drehgeschwindigkeit zu jedem vorgegebenen Zeitraum wiederholt.

2. Vorrichtung nach Anspruch 1, wobei die Einrichtung zum Ändern einer Einrückgeschwindigkeit der Kupplung eine Einrichtung zum Speichern einer Kupplungs-Einrückgeschwindigkeit umfasst, die so eingerichtet ist, dass sie ein Kennfeld speichert, das eine Beziehung zwischen der Differenz der Drehgeschwindigkeit und der Einrückgeschwindigkeit der Kupplung anzeigt, und die Einrichtung zum Ändern einer Einrückgeschwindigkeit der Kupplung so eingerichtet ist, dass sie die Einrückgeschwindigkeit der Kupplung gemäß der Differenz der Drehgeschwindigkeit der Kupplung entsprechend der gespeicherten Beziehung ändert.

3. Vorrichtung nach Anspruch 2, wobei die Kennfelder, die eine Beziehung zwischen der Differenz der Drehgeschwindigkeit und der Einrückgeschwindigkeit der Kupplung anzeigen, bei jeder Gangzahl bereitgestellt werden.

4. Vorrichtung nach einem der Ansprüche 1 bis 3, die des Weiteren eine Einrichtung umfasst, mit der eine Anfangs-Kupplungsposition verändert wird, bei der die Einrückgeschwindigkeit der Kupplung verändert wird, wobei die Anfangs-Kupplungsposition entsprechend einer erfassten Änderung der Differenz der Drehgeschwindigkeit geändert wird.

5. Sattel-Fahrzeug, das die Vorrichtung zum Steuern von Einrücken und Ausrücken einer Kupplung nach einem der Ansprüche 1 bis 4 umfasst.

6. Verfahren zum Steuern von Einrücken und Ausrücken einer Kupplung mittels Betätigung eines Kupplungs-Betätigungselementes, das die folgenden Schritte umfasst:
Erfassen einer Differenz der Kupplungs-Drehgeschwindigkeit, die eine Differenz der Drehgeschwindigkeit zwischen einer Antriebsseite und einer Abtriebsseite der Kupplung ist, Beziehen von Einrückgeschwindigkeits-Informationen der Kupplung von einer Einrichtung zum Ändern einer Einrückgeschwindigkeit der Kupplung, **gekennzeichnet durch** Ändern einer Kupplungs-Einrückgeschwindigkeit entsprechend einer Änderung der mit dem Schritt zum Erfassen der Differenz der Kupplungs-Drehgeschwindigkeit erfassten Differenz der Drehgeschwindigkeiten, so dass Erfassung der Differenz der Drehgeschwindigkeit zu jedem vorgegebenen Zeitraum wiederholt wird, und
Bewirken, dass sich die Antriebsseite und die Abtriebsseite der Kupplung einander bei der mit dem Schritt zum Ändern der Kupplungs-Einrückgeschwindigkeit geänderten Kupplungs-Einrückgeschwindigkeit nähern.

## Revendications

1. Dispositif pour commander l'embrayage et le débrayage à l'aide d'un actionneur d'embrayage (41), étant précisé que l'actionneur d'embrayage (41) est commandé sur la base d'une différence de vitesse de rotation entre le côté entraînement et le côté entraîné de l'embrayage,
comprenant une unité de commande d'actionneur d'embrayage (11),
des moyens pour détecter la différence de vitesse de rotation entre le côté entraînement et le côté entraîné de l'embrayage,
des moyens pour modifier une vitesse d'embrayage, qui sont conçus pour modifier la vitesse d'embrayage selon une variation détectée de la différence de vitesse de rotation entre le côté entraînement et le côté entraîné de l'embrayage, et
des moyens pour embrayer qui sont conçus pour amener le côté entraînement et le côté entraîné de l'embrayage à s'approcher l'un de l'autre à la vitesse d'embrayage variable,
**caractérisé en ce que** l'unité de commande d'actionneur d'embrayage (11) est apte à recueillir la vitesse d'embrayage à partir des moyens pour modifier une vitesse d'embrayage, et des moyens pour détecter la différence de vitesse de rotation entre un côté entraînement et un côté entraîné de l'embrayage sont conçus pour répéter la détection de la différence de vitesse de rotation selon une périodicité prédéterminée.

2. Dispositif selon la revendication 1, étant précisé que les moyens pour modifier une vitesse d'embrayage comprennent des moyens pour mémoriser une vitesse d'embrayage, qui sont conçus pour mémoriser un tableau indiquant une relation entre la différence de vitesse de rotation et la vitesse d'embrayage, et que les moyens pour modifier une vitesse d'embrayage sont conçus pour modifier la vitesse d'embrayage en fonction de la différence de vitesse de rotation de l'embrayage, selon la relation mémorisée.

3. Dispositif selon la revendication 2, étant précisé que les tableaux indiquant une relation entre la différence de vitesse de rotation et la vitesse d'embrayage sont fournis pour chaque vitesse.

4. Dispositif selon l'une des revendications 1 à 3, comportant également des moyens pour modifier une position d'embrayage de démarrage dans laquelle la vitesse d'embrayage est modifiée, étant précisé que la position d'embrayage de démarrage est modifiée selon une variation détectée de la différence de vitesse de rotation.

5. Véhicule du type à selle à enfourcher comprenant le dispositif pour commander l'embrayage et le débrayage selon l'une des revendications 1 à 4.

6. Procédé pour commander l'embrayage et le débrayage en actionnant un actionneur d'embrayage, comprenant les étapes qui consistent :
à détecter une différence de vitesse de rotation d'embrayage, qui est la différence de vitesse de rotation entre un côté entraînement et un côté entraîné de l'embrayage, à recueillir des informations de vitesse d'embrayage à partir de moyens pour modifier une vitesse d'embrayage,
**caractérisé par** les étapes qui consistent
à modifier une vitesse d'embrayage selon la variation de la différence de vitesse de rotation d'embrayage détectée par l'étape de détection de différence de vitesse de rotation d'embrayage, répétant ainsi la détection de la différence de vitesse de rotation selon une périodicité prédéterminée, et
à amener le côté entraînement et le côté entraîné de l'embrayage à s'approcher l'un de l'autre à la vitesse d'embrayage modifiée par l'étape de modification de vitesse d'embrayage.
